(19) Europäisches Patentamt
European Patent Office
Office européen des brevets

(11) **EP 3 551 345 B1**

(12) **EUROPÄISCHE PATENTSCHRIFT**

(45) Veröffentlichungstag und Bekanntmachung des Hinweises auf die Patenterteilung:
**20.01.2021** **Patentblatt 2021/03**

(21) Anmeldenummer: **17822540.5**

(22) Anmeldetag: **07.12.2017**

(51) Int Cl.:
*B05B 12/04* (2006.01)   *B05B 12/08* (2006.01)
*B05B 12/12* (2006.01)   *B05B 13/00* (2006.01)
*B05B 13/04* (2006.01)   *B05B 15/55* (2018.01)
*B05B 15/555* (2018.01)   *B41J 3/407* (2006.01)
*B41J 3/28* (2006.01)   *B41J 2/165* (2006.01)
*B05B 9/04* (2006.01)

(86) Internationale Anmeldenummer:
**PCT/AT2017/060329**

(87) Internationale Veröffentlichungsnummer:
**WO 2018/102846 (14.06.2018 Gazette 2018/24)**

(54) **VORRICHTUNG ZUM DRUCKEN VON BILDERN AUF BODENFLÄCHEN**

DEVICE FOR PRINTING A PICTURE ONTO A FLOOR SURFACE

DISPOSITIF POUR L'IMPRESSION D'UNE IMAGE SUR LA SURFACE D'UN SOL

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **07.12.2016   DE 102016123731**

(43) Veröffentlichungstag der Anmeldung:
**16.10.2019   Patentblatt 2019/42**

(73) Patentinhaber: **Pixelrunner GmbH**
**4232 Hagenberg (AT)**

(72) Erfinder: **SCHAUMBERGER, Ronald**
**4232 Hagenberg (AT)**

(74) Vertreter: **Westphal, Mussgnug & Partner Patentanwälte mbB**
**Werinherstrasse 79**
**81541 München (DE)**

(56) Entgegenhaltungen:
**EP-A1- 2 433 716     EP-A1- 2 641 661**
**EP-A1- 2 985 385     WO-A1-2015/007930**
**DE-B4- 10 390 349     GB-A- 2 266 863**
**US-B1- 6 330 503**

**Beschreibung**

## TECHNISCHES GEBIET

Die Erfindung betrifft eine Vorrichtung wie z.B. einen autonomen mobilen Roboter oder ein ferngesteuertes Fahrzeug zum pixelweisen Drucken von Bildern auf Bodenflächen.

## HINTERGRUND

Beispielsweise im Rahmen von Veranstaltungen (insbesondere Großereignisse wie z.B. im Bereich des Motorsports, Fußball, etc.) besteht ein Bedarf, großflächig Bilder (z.B. Logos von Sponsoren, etc.) auf Bodenflächen aufzutragen. Die Bilder können dabei vergleichsweise groß sein (z.B. über 100 Quadratmeter), so dass sie auch aus der Ferne (z.B. bei Luftaufnahmen) gut zu sehen sind. Ein Bild kann z.B. in Form eines großen Banners auf dem Boden ausgelegt werden. Alternativ dazu, kann ein Bild auch manuell auf die Rasenfläche gesprüht oder gemalt werden, beispielsweise mittels Schablonen und Farbspray. Bei mehrfarbigen Bildern ist dazu ein aufwändiges mehrstufiges Verfahren und der Einsatz mehrerer vorgefertigter Schablonen nötig. Die notwendigen Schablonen sind aufwändig herzustellen und kompliziert in der Handhabung. Darüber hinaus kann es durch manuellen Farbauftrag zu Unregelmäßigkeiten im späteren Erscheinungsbild des Bildes kommen. Die Herstellung großflächiger Bilder bzw. Beschriftungen kann auch für andere Zwecke interessant sein, z.B. Werbung nahe stark frequentierter Straßen (z.B. Autobahnabfahrten, Fußgängerzonen, etc.), die Beschriftung von Flachdächern, Straßen- und Bodenmarkierungen, etc. Aus den Publikationen EP 2 433 716 A1, EP 2 641 661 A1 und GB 2 266 863 A sind Vorrichtungen zum Sprühen einer Oberfläche bekannt, die eine Vielzahl gesteuerten Sprühdüsen aufweisen. Durch die Sprühdüsen kann auch ein Reinigungsmittel herausgesprüht werden. Weitere Farbauftragsvorrichtungen mit Farbdüsen sind aus den Publikationen DE 103 90 349 B4 und US 6 330 503 B1 bekannt. Die Publikationen WO 2015/007930 A1 und EP 2 985 385 A1 offenbaren Vorrichtungen zur Behandlung von Papier oder Pappe.

Die der Erfindung zugrunde liegende Aufgabe besteht folglich darin, eine Vorrichtung und ein Verfahren zu entwickeln, das ein großflächiges Auftragen von Bildern auf Bodenflächen wie beispielsweise auf Rasen-, Schnee, Asphalt oder Schotterflächen kostengünstig, schnell und zuverlässig ermöglicht.

## ZUSAMMENFASSUNG

Die oben genannte Aufgabe wird durch eine Vorrichtung gemäß Anspruch 1 sowie durch ein Verfahren gemäß Anspruch 13 gelöst. Unterschiedliche Ausführungsformen und Weiterentwicklungen der Erfindung sind Gegenstand der abhängigen Ansprüche.

Es wird eine Vorrichtung zum Drucken eines Bildes auf eine Bodenfläche beschrieben. Gemäß einer exemplarischen Ausführungsform umfasst die Vorrichtung eine Steuerung und ein Drucksystem. Das Drucksystem weist mindestens einen Farbtank mit Farbmittel und mindestens einen Sprühbalken mit mehreren nebeneinander angeordneten Düsenbaugruppen auf. Die Düsenbaugruppen haben jeweils ein von der Steuerung steuerbares Ventil und eine Farbdüse, über die Farbmittel auf die Bodenfläche aufgetragen werden kann. Das Drucksystem weist außerdem einen Reinigungsmitteltank auf, der über eine oder mehrere Zuleitungen mit zumindest einem Teil der Düsenbaugruppen verbunden ist. Jeder der Düsenbaugruppen weist eine über die Zuleitung versorgte und der jeweiligen Farbdüse zugeordnete Reinigungsdüse auf, die so angeordnet ist, dass Reinigungsmittel von außen auf die Farbdüse gesprüht werden kann. Die Farbdüse ist über ein Ventil mit der Zuleitung verbunden, sodass Reinigungsmittel ins Innere der Farbdüse geleitet und aus der Farbdüse herausgesprüht werden kann.

Des Weiteren wird ein Verfahren zum Drucken eines Bildes auf eine Bodenfläche mittels einer Vorrichtung beschrieben, die gemäß einer exemplarischen Ausführungsform ein Drucksystem aufweist, das mindestens einen Sprühbalken mit mehreren nebeneinander angeordneten Düsenbaugruppen umfasst. Die Düsenbaugruppen weisen wiederum jeweils ein steuerbares Ventil und eine Farbdüse auf. Das Drucksystem weist außerdem einen Reinigungsmitteltank auf, der über eine oder mehrere Zuleitungen mit zumindest einem Teil der Düsenbaugruppen verbunden ist. Jede der Düsenbaugruppen weist eine über die Zuleitung versorgte und der jeweiligen Farbdüse zugeordnete Reinigungsdüse auf. Die Farbdüse ist über ein Ventil mit der Zuleitung verbunden. Gemäß dieser exemplarischen Ausführungsform umfasst das Verfahren das Durchfahren eines ersten Bahnsegments mit dem mobilen Roboter und das Ansteuern der Ventile der Düsenbaugruppen zum Abgeben von Farbe durch eine dem Ventil zugeordnete Farbdüse. Dabei wird für jeden Bildpunkt und jede Farbe abhängig von der Position des Roboters ein Druckbefehl für die Ventile erzeugt, sodass das Bild pixelweise auf die Bodenfläche aufgetragen wird. Das Verfahren umfasst weiter das regelmäßiges Reinigen der Farbdüsen durch Aufsprühen von Reinigungsmittel auf die Farbdüsen von außen mittels den in den Düsenbaugruppen angeordneten Reinigungsdüsen und das regelmäßiges Reinigen der Farbdüsen durch Leiten ins Innere der Farbdüse und Heraussprühen von Reinigungsmittel aus der Farbdüse.

Ein Ausführungsbeispiel betrifft ein Reinigungsverfahren zum Reinigen der Düsenbaugruppen eines Sprühbalkens, wobei jede Düsenbaugruppe eine Farbdüse und eine dieser zugeordneten Reinigungsdüse aufweist. Das Verfahren umfasst das Zuführen von Reinigungsmittel zu der Reinigungsdüse, sodass Reinigungsmittel aus der Reinigungsdüse austritt und von außen auf die Farbdüse gesprüht wird und das Zuführen von Reinigungsmittel ins Innere der Farbdüse, sodass das Reinigungsmittel aus der Farbdüse austritt.

## KURZE BESCHREIBUNG DER ABBILDUNGEN

Die Erfindung wird nachfolgend anhand von den in den Figuren dargestellten Beispielen näher erläutert. Die Darstellungen sind nicht zwangsläufig maßstabsgetreu und die Erfindung beschränkt sich nicht nur auf die dargestellten Ausführungsbeispiele und Aspekte. Vielmehr wird Wert darauf gelegt, die der Erfindung zugrunde liegenden Prinzipien darzustellen. In den Figuren bezeichnen gleiche Bezugszeichen gleiche oder ähnliche Komponenten mit gleicher bzw. ähnlicher Bedeutung bzw. Funktion.

Figur 1 zeigt anhand einer schematischen Darstellung von oben (Draufsicht) ein Beispiel eines Roboters zum Bedrucken von Bodenflächen.

Figur 2 zeigt den Roboter gemäß Fig. 1 anhand einer Darstellung von unten (Untersicht).

Figur 3 zeigt den Roboter gemäß Fig. 1 anhand einer Darstellung von vorne (Ansicht).

Figur 4 zeigt anhand eines schematischen Diagramms exemplarisch die Funktionsweise einer Druckereinheit (Sprühbalken) mit einer Vielzahl von Düsen zum pixelweisen Auftragen von Farbe.

Figur 5 ist eine schematische Darstellung einer in einem Sprühbalken enthaltenen Düsen zum Auftragen von Farbe.

Figur 6 zeigt einen schematischen Aufbau eines Beispiels eines Sprühmoduls, wobei ein Sprühbalken aus einem oder mehreren aneinandergereihten Sprühmodulen aufgebaut sein kann.

Figur 7 illustriert anhand einer Darstellung von oben das Bedrucken einer Bodenfläche mittels des Roboters gemäß Fig. 1-3.

Figur 8 zeigt anhand einer exemplarischen Draufsicht den Fahrweg (Trajektorie) des Roboters über einen Druckbereich.

Figur 9 zeigt weiteres Beispiel einer Robotertrajektorie über den Druckbereich.

Figur 10 illustriert die Anpassung der Robotertrajektorie eines Bahnsegments an das Teilbild, das beim Durchfahren des vorhergehenden Bahnsegments gedruckt wurde.

## DETAILLIERTE BESCHREIBUNG

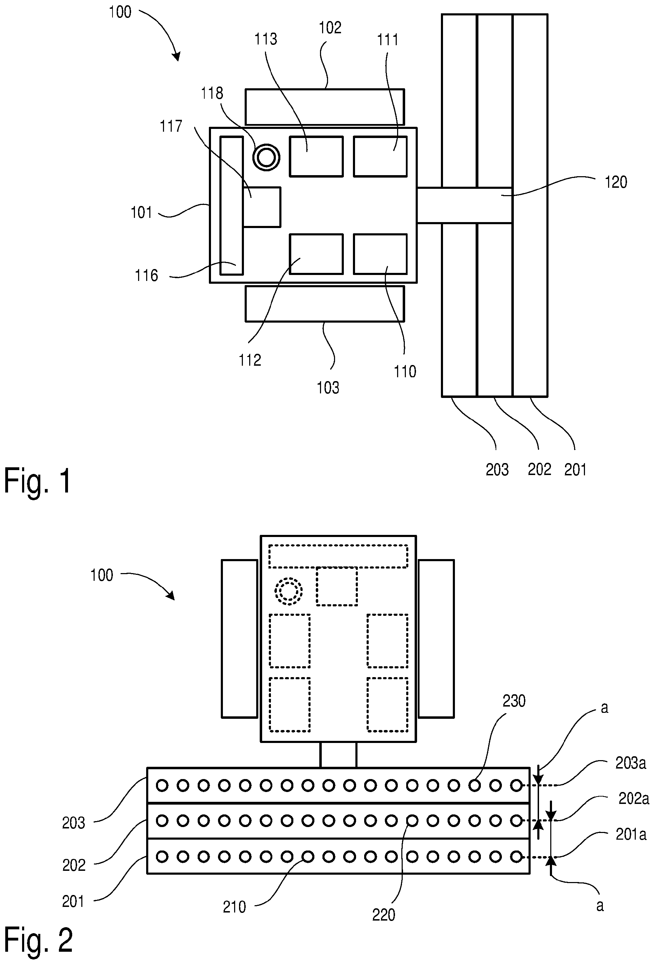

Figur 1 illustriert anhand einer schematischen Draufsicht ein Beispiel eines Roboters 100 zum pixelweisen Bedrucken von Bodenflächen. Der Roboter 100 weist ein Gehäuse 101 auf, das zumindest mit einem Fahrwerk mechanisch verbunden oder auf diesem angeordnet sein kann. Im vorliegenden Beispiel weist das Fahrwerk ein Kettenlaufwerk mit den beiden Ketten 102 und 103 auf. Statt dem Kettenlaufwerk kann der Roboter auch Räder aufweisen. Auch eine Kombination von Ketten und Rädern ist möglich.
Die Ketten oder die Räder sind beispielsweise mit einem Elektromotor angetrieben, der über einen im Roboter 100 angeordnete Batterie mit Energie versorgt wird. Andere Antriebsarten sind möglich. Im oder auf dem Gehäuse 101 können zumindest ein Farbmittelbehälter (z.B. Farbtanks 110, 111 und 112), ein Reinigungsmittelbehälter (Reinigungsmitteltank 113), ein elektrischer Konverter 116 (Strom-/Spannungswandler) und eine Steuerung 117 angeordnet sein. Abhängig von der verwendeten Batterie und den elektrischen Eigenschaften des Antriebs kann der Konverter 116 auch entfallen. Optional kann die Steuerung 117 dazu ausgebildet sein, mit Hilfe einer Antenne 118 Steuerbefehle zu empfangen oder Statusinformationen (beispielsweise über einen Ladezustand der Batterie oder den Fortschritt des Druckprozesses) zu senden. Die Antenne 118 kann beispielsweise eine WLAN-Antenne sein. Der Konverter 116 ist z.B. ein DC/DC-Wandler zum Umwandeln der Batteriespannung in die für den Betrieb des Roboters nötige Betriebsspannung (z.B. 24 V) umzuwandeln. Die Farbtanks 110, 111 und 112 sowie der Reinigungsmitteltank 113 können austauschbare Kunststoffbehälter sein. Für einen raschen Tausch der Tanks können diese z.B. mit Schnellwechselverschlüssen am Gehäuse (direkt oder indirekt) befestigt sein.
Ganz allgemein kann die Steuerung 117 dazu ausgebildet sein, den Roboter autonom über die Bodenfläche zu navigieren. Alternativ kann die Steuerung 117 den Roboter nach Maßgabe von Steuerbefehlen bewegen, die von einer Fernsteuerung empfangen werden, die von einer Bedienperson bedient wird. Die Steuerung kann dazu Fahrassistenzfunktionen zur Verfügung stellen, die eine zumindest teilweise selbsttätige Navigation der Vorrichtung ermöglichen. Gesetzliche Bestimmungen können vorschreiben, dass ein Fahrer mit dem Fahrzeug mitfährt. Die Vorrichtung bzw. der Roboter bewegt sich dabei entlang einer Trajektorie. Die Bahn des Roboters kann dabei in mehrere Bahnsegmente unterteilt sein, in denen die Trajektorie im Wesentlichen geradlinig verlaufen kann. Beim Durchfahren eines dieser Bahnsegmente werden mehrere Bildzeilen eines Teilbildes des zu druckenden Bildes pixelweise auf die Bodenfläche gedruckt. Beim Durchfahren des nächsten, zum ersten Bahnsegment benachbarten Bahnsegmentes werden mehrere Bildzeilen eines weiteren Teilbildes des zu druckenden Bildes pixelweise auf die Bodenfläche gedruckt. Eine Herausforderung bei der Steuerung des Roboters besteht darin, die Teilbilder möglichst "nahtlos" nebeneinander zu drucken.

Die Vorrichtung/der Roboter 100 kann Sensoren zur Bestimmung der eigenen Position (Ort und Lage) aufweisen. Die Sensoren zur Positionsbestimmung können auf unterschiedlichen Messprinzipien beruhen, beispielsweise Odometrie (z.B. mittels eines oder mehrerer Radumdrehungssensoren), kamerabasierte Odometrie, Positionsbestimmun mittels GPS (z.B. differentielles GPS), etc. Über einen Ausleger 120 können am Roboter 100 (z.B. an dessen Karosserie) Sprühbalken 201, 202, 203 befestigt sein, die auch als Sprühbalken bezeichnet werden. Der Ausleger 120 hält die Sprühbalken 201, 202, 203 in einem definierten Abstand über der zu bedruckenden Oberfläche. Dieser Abstand kann einstellbar sein. Dazu kann der Roboter z.B. einen Aktor (nicht dargestellt) aufweisen, der den Ausleger 120 schwenken und damit die Sprühbalken 201, 202, 203 anheben oder absenken kann. Die Sprühbalken 201, 202, 203 können separate Komponenten sein oder auch zu einem Bauteil verbunden sein.

Am zweiten Ende des Hebearmes 120 kann zumindest eine Düsenbaugruppe 210 angebracht sein. Fünf Düsenbaugruppen 210 können ein Düsenmodul bilden und mehrere Düsenmodule können jeweils einen Düsenbalken 201, 202 oder 203 bilden. Im dargestellten Beispiel weist der Roboter 100 drei Düsenbalken 201, 202 und 203 mit jeweils 40 Düsenbaugruppen auf. Jeder Sprühbalken kann aus einem oder mehreren Sprühmodulen bestehen, wobei jedes Sprühmodul mehrere Düsen aufweist, über die Farbe auf die Bodenfläche gesprüht werden kann. Jede Düse färbt genau einen Pixel des zu druckenden Bilds mit einer bestimmten Farbe ein. Bei einem Mehrfarbendruck wird jedes Pixel des zu druckenden Bildes entsprechend mehrfach mit unterschiedlichen Farben eingefärbt. Gemäß einer exemplarischen Implementierung umfasst ein Sprühbalken acht Sprühmodule mit jeweils fünf Düsen, sodass ein Sprühbalken vierzig Düsen aufweist und folglich vierzig Pixel in einer Reihe gleichzeitig einfärben kann.

In Figur 2 ist der Roboter 100 von unten dargestellt. Dargestellt sind unter anderem die drei Sprühbalken 201, 202 und 203 mit Düsen 210, 220 bzw. 230. (Farbdüsen) Der Abstand zweier benachbarter Düsen entspricht dem Pixelabstand (Pixel-Pitch). Die Sprühbalken 201, 202 und 203 sind parallel zueinander angeordnet, sodass drei parallele Reihen von Düsen gebildet werden, wobei die Düsen 210, 220, 230 jeweils entlang einer Längsachse 201a, 202a, 203a des jeweiligen Sprühbalkens 201, 202, 203 angeordnet sein können. Der Abstand a zweier benachbarten Sprühbalken (also zwischen Längsachse 201a und 202a sowie zwischen Längsachse 202a und 203a) kann ein ganzzahliges Vielfaches des Abstandes zweier benachbarter Düsen (d.h. des Pixelabstandes) sein. In einer exemplarischen Implementierung ist der Abstand a gleich dem fünffachen Pixelabstand.

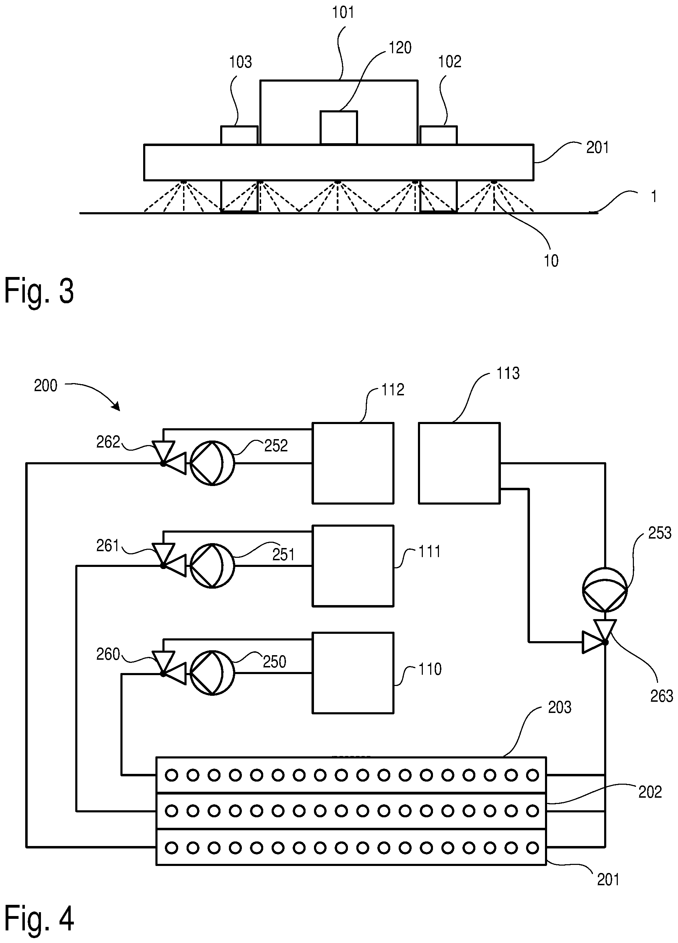

Figur 3 ist eine schematische Vorderansicht des Roboters 100. Der Roboter 100 steht mit den Ketten 102 und 103 des Kettenlaufwerkes auf einer Bodenfläche 1, die im Betrieb bedruckt werden soll während der Roboter über die Bodenfläche fährt. Die zu bedruckende Bodenfläche 1 kann beinah beliebig beschaffen sein, z.B. eine Rasenfläche, ein Asphaltboden, ein beschneiter Hang, etc. Die Bodenfläche muss nicht eben sein. In der vorliegenden Vorderansicht ist nur der Sprühbalken 201 zu sehen (er verdeckt die dahinter liegenden Sprühbalken 202 und 203). Über die zuvor erwähnten Düsen 210, 220 und 230 kann pixelweise Farbe auf die Bodenfläche 1 aufgetragen werden, während der Roboter 100 über diese fährt.

Mit den drei Sprühbalken 201, 202, 203, kann ein Dreifarbdruck realisiert werden, wobei mittels subtraktiver Farbmischung für jeder einzelne Pixel mit einer bestimmten Farbe eingefärbt werden kann. Dazu kann beispielsweise der Sprühbalken 201 mit magenta Farbmittel, der Sprühbalken 202 mit gelbem Farbmittel und der Sprühbalken 203 mit cyanem Farbmittel versorgt werden. Während der Roboter 100 sich vorwärtsbewegt, können die einzelnen Pixel mit definierter Position auf der Bodenfläche 1 nacheinander magenta, gelb und cyan eingefärbt werdend. Die über die einzelnen Düsen abgegebene Farbstoffmenge ist steuerbar. Das Verhältnis der Farbmengen magenta/gelb/cyan bestimmt den Farbton und die absolute Farbmenge die Farbsättigung. An dieser Stelle sei angemerkt, dass auch ein vierter Sprühbalken mit schwarzer oder weißer Farbe verwendet werden kann. Es können auch mehr als drei Sprühbalken vorgesehen sein, um einen Mehrfarbendruck zu realisieren, beispielsweise fünf Sprühbalken für die Farben Cyan, Magenta, Gelb, Schwarz und Weiß, um eine Farbmischung gemäß dem CMYK-Farbmodell zu ermöglichen (je nach Farbe der Bodenfläche kann auch eine weiße Farbe nötig sein).

Das Drucksystem 200 des Roboters 100 ist exemplarisch in Fig. 4 dargestellt. Das Drucksystem umfasst unter anderem die Sprühbalken 201, 202, 203, die Farbtanks 110, 111, 112, den Reinigungsmitteltank 113, Membranpumpen 250, 251, 252, 253 zur Förderung der Farben aus den Farbtanks und des Reinigungsmittels aus dem Reinigungsmitteltank, Überströmventile 260, 261, 262, 263, und die Verbindungsleitungen, die die einzelnen Komponenten verbinden. Das Diagramm in Fig. 4 zeigt, ähnlich wie ein Signallaufplan, die Versorgung der Sprühbalken 201, 202, 203 mit Farbmittel aus den Farbtanks 110, 111, 112 sowie mit Reinigungsmittel aus dem Reinigungsmitteltank 113. Die Membranpumpen 250, 251, 252 fördern Farbmittel aus den Farbtanks 110, 111, 112 hin zu den Sprühbalken 201, 202, 203 (oder zu den Sprühmodulen, aus denen die Sprühbalken zusammengesetzt sein können). Der Aufbau der Sprühbalken bzw. einzelner Sprühmodule wird später noch genauer erläutert. Das vorliegende Beispiel ist für einen Dreifarbdruck geeignet. Für einen Druck mir vier, fünf oder mehr Farben, können entsprechend mehr Farbtanks und Sprühbalken vorgesehen sein.

Die Saugseiten der Membranpumpen 250, 251 und 252 sind hydraulisch mit den Farbtanks 110, 111, 112 verbunden, die Druckseiten mit den Sprühbalken 201, 202, 203. Optional, können zwischen den Druckseiten der Membranpumpen 250, 251, 252 und den Farbtanks 110, 111, 112 jeweils Überströmventile 260, 261, 262 angeordnet sein. Über die Überströmventile 260, 261, 262 kann überschüssige Farbe zurück in den jeweiligen Farbtank geleitet werden. Dies kann dann der Fall sein, wenn die Membranpumpen mehr Farbe fördern als über den Sprühbalken abgegeben wird. Auf diese Weise können die Überströmventile 260, 261, 262 eine Überlastung der Membranpumpen 250, 251, 252 verhindern. Die Membranpumpen 250, 251 und 252 können außerdem Pulsationsdämpfer aufweisen, die eine gleichmäßige Förderung der Farbmittel aus den Farbtanks sicherstellen.

Die Förderung von Reinigungsmittel aus dem Reinigungsmitteltank 113 hin zu den Sprühbalken 201, 202, 203 kann in gleicher Weise realisiert werden wie die Förderung von Farbe. Für diesen Fall gilt das, was in Bezug auf die Membranpumpen 250, 251, 252 zur Förderung von Farbe aus den Farbtanks gesagt wurde, auch für die Membranpumpe 253 zur Förderung von Reinigungsmittel aus dem Reinigungsmitteltank 113. Auch die Membranpumpe 253 kann mit einem Überströmventil 263 kombiniert werden, um eine Überlastung der Membranpumpe 253 zu verhindern und überschüssiges Reinigungsmittel in den Reinigungsmitteltank 113 zurück zu leiten. In diesem Zusammenhang sei angemerkt, dass auch andere Typen von Pumpen verwendet werden können. Es sind auch Drucksysteme möglich, die ohne Pumpen auskommen. In diesem Fall könnten z.B. die Farbtanks unter Druck gesetzt werden (z.B. mittels Pressluft). Ganz allgemein muss das Drucksystem 200 Komponenten enthalten, die dazu ausgebildet sind, den Sprühbalken (oder den einzelnen Sprühmodulen) Farbe und Reinigungsmittel mit einem definierten Druck zur Verfügung zu stellen.

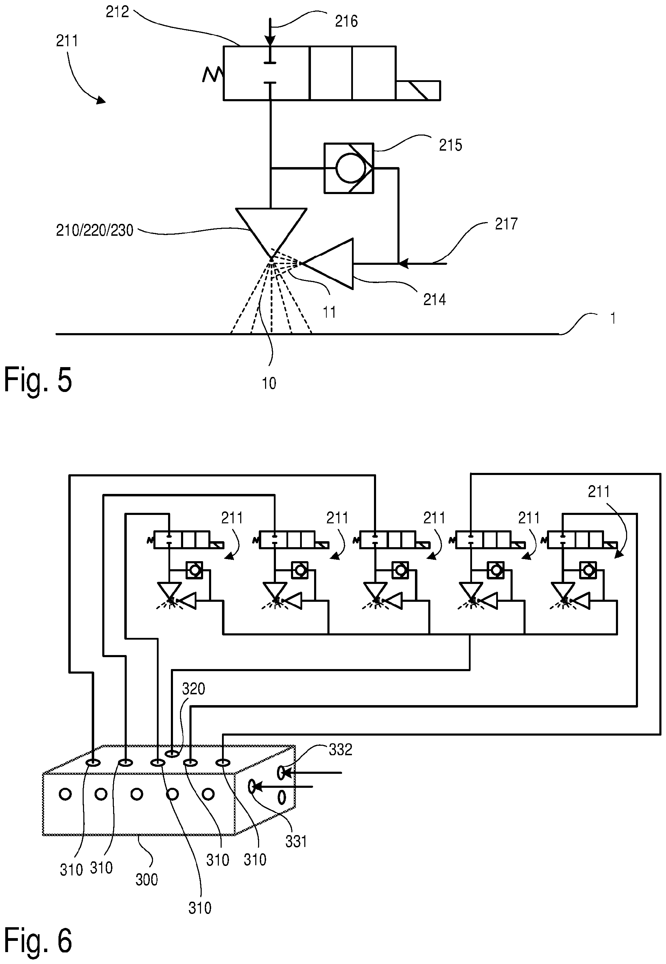

In dem Sprühbalken 201 sind die einzelnen Farbdüsen 210 angeordnet (vgl. auch Fig. 2), wobei jede Farbdüsen 210 einer Baugruppe 211 (Düsenbaugruppe) zugeordnet ist, die ein Ventil 212 für die Steuerung der über die Farbdüse 210 abzugebende Farbmenge, eine Reinigungsdüse 214 und ein Rückschlagventil 215 enthält, das die Zufuhr von Reinigungsmittel zur Farbdüse 210 ermöglicht, jedoch ein Abfließen von Farbe hin zur Zuleitung 217 für das Reinigungsmittel verhindert. Ein exemplarischer Aufbau der erwähnten Düsenbaugruppe 211 ist in Figur 5 gezeigt. Je nach Anwendungsfall kann die Düsenbaugruppe 211 auch anders aufgebaut sein. Beispielsweise ist die separate Reinigungsdüse 214 nicht zwangsläufig nötig und eine Außenreinigung der Farbdüse 210 entfällt. In einem anderen Beispiel kann das Rückschlagventil 215 weggelassen werden, und die Reinigung der Farbdüse 210 erfolgt nur von außen.

In dem Beispiel aus Fig. 5 weist die Düsenbaugruppe 211 eine Zuleitung 216 Für Farbe und eine Zuleitung 217 für Reinigungsmittel auf. Über die Zuleitung 216 kann der Düsenbaugruppe 210 Farbmittel 10 aus einem der Farbmittebehälter 110, 111 und 112 zugeführt werden. Über die Zuleitung 217 kann der Düsenbaugruppe 210 Wasser 11 aus dem Wasserbehälter 113 zugeführt werden. Die Zuleitung 216 ist hydraulisch, beispielsweise über ein steuerbares Ventil 212, mit dem Einlass der Farbdüse 210 verbunden. Das Ventil 212 kann ein elektromechanisch steuerbares 2/2-Wegeventil (z.B. ein Magnetventil) sein, und kann die über die Farbdüse 210 abgegebene Farbmenge steuern.

Der Einlass der Reinigungsmitteldüse 214 kann über die Zuleitung 217 mit dem Reinigungsmittelbehälter 213 verbunden sein und von diesem mit Reinigungsmittel 11 versorgt werden. Die Reinigungsmitteldüse 214 kann auf die Farbmitteldüse 211 gerichtet sein, sodass das von der Reinigungsmitteldüse 214 austretende Reinigungsmittel 11 von außen auf die Farbdüse 210 gesprüht wird und diese von Farbrückständen gereinigt wird. Der Einlass der Farbdüse 210 kann zusätzlich über das Rückschlagventil 215 ebenfalls mit der Zuleitung 217 verbunden sein, sodass bei der Reinigung das Reinigungsmittel 11 auch durch die Farbdüse 210 strömt und diese innen reinigt. Beim Drucken verhindert das Rückschlagventil 215, dass Farbe hin zur Zuleitung 217 für das Reinigungsmittel fließen kann.

Figur 6 zeigt einen schematischen Aufbau eines Sprühmoduls. Wie erwähnt können die Sprühbalken 201, 202, 203 jeweils aus einem oder mehreren Sprühmodulen aufgebaut sein. Im vorliegenden Beispiel weist das Sprühmodul fünf Düsenbaugruppen 211 (jeweils mit einer Farbdüse 210) aufweisen, die über eine Verteilereinheit 300 hydraulisch mit den Farbmittelbehältem 110, 111 und 112 und dem Wasserbehälter 113 verbunden sind. Die Verteilereinheit 300 kann ein metallischer, quaderförmiger Block sein, der mehrere Bohrungen aufweist, die teilweise hydraulisch miteinander verbunden sind. Im vorliegenden Beispiel weist die Verteilereinheit 300 kann zumindest einen Einlass 331, einen Auslass 332, einen oder mehrere Auslässe 310 sowie einen Auslass 320 aufweisen. Der Einlass 331 ist hydraulisch mit einem der Farbmittelbehälter 110, 111 und 112 verbunden. Der Einlass 332 ist hydraulisch mit dem Wasserbehälter 113 verbunden sein. Der Verteilerblock 300 verbindet den Einlass 331 für Farbe mit den Auslässen 310, und den Einlass 332 für Reinigungsmittel mit dem Auslass 320. Die Auslässe 310 können außerdem als Sitz für die Düsenbaugruppen 211 ausgebildet sein. Gemäß einem Beispiel können die Farbdüsen 10 der Düsenbaugruppen 211 in die Auslässe 310 eingeschraubt sein.

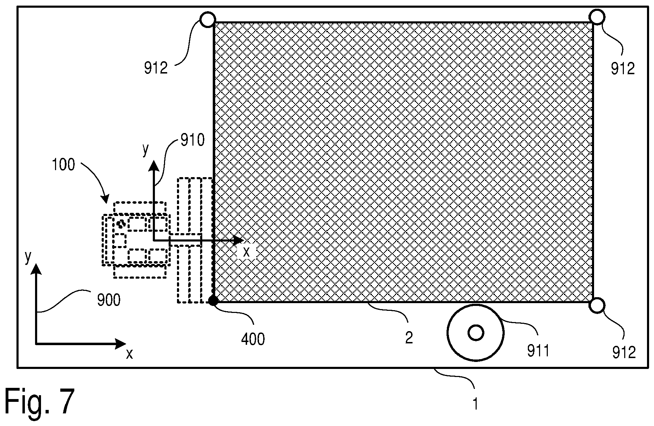

Figur 7 ist eine Draufsicht auf eine Bodenfläche 1 auf der sich der Roboter 100 befindet, wobei ein Teil der Bodenfläche mit einem Bild 2 bedruckt ist. Fig. 7 dient zur Illustration des mit Hilfe des Roboters 100 durchgeführten Druckverfahrens. Zum Drucken des Bilds 2 auf die Bodenfläche 1, kann der Roboter 100 zunächst an einem Startpunkt 400 positioniert und in eine gewünschte Richtung ausgerichtet werden. Der Startpunkt 400 kann im Falle eines rechteckigen Bilds 2 ein Eckpunkt des Bilds 2 sein. Im dargestellten Beispiel wird der Roboter 100 mit einer Ecke des vordersten Sprühbalkens 201 am Startpunkt 400 positioniert. Ohne Beschränkung der Allgemeinheit kann die Position des Roboters 100 als die Position der am weitesten rechts liegenden Farbdüse 210 des vordersten Sprühbalkens 201 definiert werden.

Das zu druckende Bild 2 kann zunächst als Rastergrafik vorliegen, die elektronisch in einer Bild-Datei gespeichert ist. Jedes übliche Dateiformat (z.B. *JPEG File Interchange Format* (JFIF), *Portable Network Graphics* (PNG), *Tagged Image File Format* (TIFF), etc.) ist möglich. Die Bild-Datei wird dann mithilfe einer Software (*Resizer-Software*) in für den Roboter 100 weiter verarbeitbare Bilddaten umgewandelt und in einer maschinenlesbaren Datei gespeichert. Dabei wird zuerst eine Farbseparation durchgeführt. Das heißt, dass die in der Bilddatei enthaltenen Farbdaten (z.B. Rot- Grün- und Blauwerte mit jeweils 8 Bit für 24 Bit Farbtiefe) zu den einzelnen Pixeln werden in entsprechende Farbmengen der verwendeten Farbmittel (in den Farbmittelbehältern 110, 111 und 112) umgerechnet. Des Weiteren wird die Rastergrafik auf die gewünschte Größe skaliert. Dabei wird Anzahl der Pixel so angepasst, dass bei der gewünschten Bildgröße der Pixelabstand dem Abstand der Farbdüsen 210 in den Sprühbalken des Roboters 100 entspricht.

Diese für den Roboter verarbeitbaren Bilddaten können mittels einer Kommunikationsschnittstelle an die Steuerung 117 (siehe Fig. 1) des Roboters 100 übertragen werden. Die Kommunikationsschnittstelle kann z.B. eine USB-Schnittstelle sein. Des Weiteren ist eine drahtlose Übertragung, beispielsweise über ein im Roboter 100 integrierten WLAN-Modul möglich. Zusätzlich oder alternativ zu WLAN (Funkverbindung gemäß einem der IEEE-802.11 Standards) können auch andere drahtlose Verbindungen (z.B. Bluethooth, ZigBee, etc.) verwendet werden. Die Steuerung 117 des Roboters kann beispielsweise dazu ausgebildet sein, aus den Bilddaten einen Fahrweg des Roboters 100 (Roboterbahn, Trajektorie) zu berechnen und anschließend das Fahrwerk des (z.B. Ketten 102 und 103) mit entsprechenden Fahrbefehlen so anzusteuern, dass der Roboter der berechneten Roboterbahn folgt. Die Steuerung 117 kann aus der Bilddaten auch Steuerbefehle für die Membranpumpen 250, 251, 252 und 253 und für die Ventile 212 im Roboter 100 generieren. Über die Ventile 212 wird direkt die auf die Bodenfläche 1 aufgetragene Farbmenge gesteuert.

Da das zu druckende Bild 2 in der Regel eine Rastergrafik ist, ist durch das Bild auch ein globales, ortsfestes (kartesisches) Koordinatensystem 900 definiert. Dieses Koordinatensystem kann von der Robotersteuerung 117 auch verwendet, um den Roboter 100 über die Bodenfläche zu navigieren. Dazu benötigt die Robotersteuerung die Position $\vec{x}_r^t$ des Roboters im globalen Koordinatensystem

$$\vec{x}_r^t = (x_r^t \quad y_r^t \quad \theta_r^t)^T \qquad (1)$$

zu jedem Zeitpunkt t bekannt sein. Die Koordinaten $x_r^t$ und $y_r^t$ bezeichnet dabei den Ort des Roboters 100 im globalen Koordinatensystem des Roboters 900 und $\theta_r^t$ die Orientierung des Roboters (Winkel zwischen x-Achse des globalen Koordinatensystems 900 und eines lokalen, mit dem Roboter mitbewegtes Koordinatensystems 910). Vom Roboter erfasste Sensordaten liegen in der Regel im lokalen Koordinatensystem 910 des Roboters vor und können über eine Koordinatentransformation in das globale Koordinatensystem transformiert werden. Sobald der Roboter 100 eine bestimmte (globale) Position $\vec{x}_r^t$ erreicht hat, wird ein Druckbefehl $b(\vec{x}_r^t)$ ausgeführt und über die Sprühbalken 201, 202, 203 wird Farbe auf die Bodenfläche 1 aufgetragen. Während der Roboter sich entlang der zuvor berechneten (z.B. mäanderförmigen) Bahn bewegt, wird das das Bild 2 Pixel für Pixel auf die Bodenfläche "gedruckt".

Solange der Roboter 100 sich entlang einer geradlinigen Trajektorie eines geradlinigen Bahnsegments bewegt, können praktisch beliebig viele Bildpunkte (Pixel) entlang einer Bildzeile gedruckt werden, wobei so viele Bildzeilen gleichzeitig gedruckt werden können, wie ein Sprühbalken Farbdüsen hat (in den oben beschriebenen Beispielen sind das 40 Farbdüsen). Um ein regelmäßiges Bild zu erzeugen, müssen in regelmäßigen Abständen die Farbdüsen (über die Ventile 212, siehe Fig. 5) angesteuert werden (Druckbefehle $b(\vec{x}_r^t)$ ). Dazu muss der Roboter 100 regelmäßig seine Position (inkl. Orientierung) in globalen Koordinatensystem 900 ermitteln. Dieser Vorgang wird auch als Lokalisierung bezeichnet. Zur fortlaufenden Lokalisierung kann der Roboter 100 Sensordaten von einem oder mehreren Sensoren auswerten. Eine mögliche Methode zur Lokalisierung des Roboters 100 ist Odometrie. Das heißt, der Roboter bestimmt seine Position basierend auf der zurückgelegten Wegstrecke, die wiederum z.B. mittels Drehgeber an den (Ketten-) Rädern ermittelt werden kann. Odometrie zur Bestimmung der Position und Orientierung von mobilen Robotern in einem Koordinatensystem ist an sich bekannt und wird daher hier nicht weiter erläutert.

Odometrie basierend auf Drehgeber-Sensordaten ist nur auf kurze Distanzen genau und die vom Roboter ermittelte Position kann von der tatsächlichen Position wegdriften (z.B. aufgrund von Schlupf). Um die Genauigkeit der Lokalisierung zu verbessern, können neben den Drehgebern noch weitere Sensoren verwendet werden, die andere Messprinzipien umsetzen, wie z.B. eine Kamera für kamerabasierte Odometrie, Abstandssensoren wie z.B. Laserscanner für SLAM (*Simultaneous Lokalisation an Mapping*), Empfänger für satellitengestützte Ortung (z.B. GPS-Ortung und DGPS-Ortung). Zur Verbesserung der Genauigkeit kann die Steuerung 117 des Roboters dazu ausgebildet sein, Sensordaten verschiedener Sensoren zu fusionieren (Sensordatenfusion). Beispielsweise kann die mittels Odometrie (mittels Drehgeber) ermittelte Position regelmäßig basierend auf den Sensordaten anderer Sensoren (z.B. DGPS-Empfänger) korrigiert werden. Der Roboter kann auch mittels Abstandssensoren (z.B. Laserscanner) Landmarken detektieren, die Position des Roboters 100 relativ zu den detektierten Landmarken messen (z.B. mittels Triangulation), und die so ermittelte Position zur Korrektur der Odometrie verwenden. Landmarken sind ganz allgemein Objekte mit bekannter Position. In Fig. 7 sind die Objekte 911 (z.B. ein Baum) und Objekte 912 (z.B. Markierungsstangen mit Reflektoren) eingezeichnet.

Mit künstlich angebrachten und an das Gelände angepassten Objekten 912 kann z.B. sichergestellt werden, dass auch in z.B. hügeligem Gelände genügend Landmarken im Erfassungsbereich der Sensoren des Roboters befinden, um eine Lokalisierung durchzuführen. Die Positionen der Objekte 911 und 912 können vom Roboter 100 in einer elektronischen Karte abgespeichert werden. Die Karte kann auch die Positionen der einzelnen Pixel des zu druckenden Bildes 2 enthalten. Sobald der Roboter eine Position erreicht hat, an der eine bestimmte Gruppe von Bildpunkten gedruckt werden soll, kann die Robotersteuerung einen Druckbefehl erzeugen, der die Ventile 212 in den Sprühbalken entsprechend ansteuert.

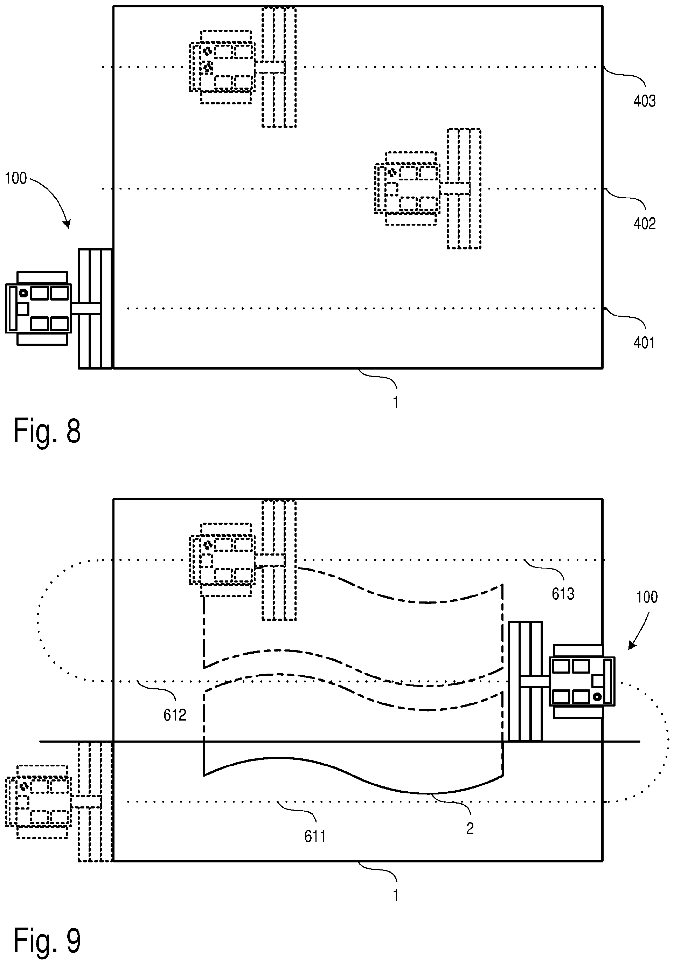

Figur 8 zeigt einen exemplarisch eine mögliche Bahn (Trajektorie), entlang sich der Roboter beim Drucken des Bilds 2 bewegt. Die Roboterbahn kann mehrere geradlinige Bahnsegmente 401, 402 und 403 aufweisen, die der Roboter sequentiell durchfährt. Im dargestellten Beispiel fährt der Roboter 100 entlang der Bahnsegmente 401, 402 und 403 über die Bodenfläche 1. Jede der Bahnsegmente 401, 402 und 403 wird dabei in gleicher Richtung überfahren. Dazu fährt der Roboter 100 am Ende jedes Bahnsegments 401, 402 zum Anfang des jeweils nächsten Bahnsegments 402, 403.

In dem Beispiel gemäß Fig. 9 besteht die Roboterbahn ebenfalls aus parallelen geradlinigen Bahnsegmenten 611, 612 und 613. Anders als im vorherigen Beispiel durchfährt der Roboter die Bahnsegmente 611, 612 und 613 mäanderartig. Im Folgenden wird das von dem Roboter 100 durchgeführte Druckverfahren zusammengefasst. Zunächst wird der Roboter 100 am Startpunkt 400 abgestellt (vgl. Fig. 7). Zeitlich davor oder danach werden wie oben erläutert aus einer Bild-Datei für den Roboter werter verarbeitbare Bilddaten berechnet, die an die Steuerung 117 des Roboters 100 übertragen werden. Basierend auf diesen Bilddaten kann die Steuerung 117 des Roboters eine Roboterbahn planen, entlang der Roboter dann über die Bodenfläche 1 fährt. Während sich der Roboter bewegt ermittelt der Roboter fortlaufend seine Position (und Orientierung) in einem globalen Koordinatensystem, in dem auch die Positionen der einzelnen Bildpunkte (Pixel) festgelegt sind. Sobald der Roboter eine Position erreicht, an der ein oder mehrere Bildpunkte gedruckt werden sollen, erzeugt die Robotersteuerung 117 einen Druckbefehl zur Ansteuerung der Ventile 212 in den Sprühbalken 201, 202, 203 (vgl. Fig. 1-5).

Ein "Bildpunkt" bzw. Pixel kann z.B. eine annähernd ovale oder rechteckige Fläche mit einer Länge im Bereich von 20 bis 38 mm und einer Breite im Bereich von 10 bis 19 mm sein. Jeder Pixel kann vom Roboter 100 einzeln mit Farbmittel 10 besprüht werden. Die Sprühbalken 201, 202 und 203 können jeweils unterschiedliche Farben auf die Bodenfläche 1 auftragen, wobei für einen Mehrfarbendruck auf den gleichen Bildpunkt (Pixel) hintereinander unterschiedliche Farben (z.B. weiß, cyan, magenta, gelb und schwarz) aufgetragen werden. Alternativ kann ein Pixel auch in mehrere Subpixel unterteilt werden, wobei jeder Subpixel mit einer anderen Farbe eingefärbt wird.

In regelmäßigen Abständen oder bei beistimmten Ereignissen (z.B. Ende eines-Bahnsegments oder nach dem Wechseln der Farbe, etc.) kann jeweils eine Reinigung der Farbdüsen 210 durchgeführt werden. Dazu kann Reinigungsmittel 11 aus dem Reinigungsmittelbehälter 113 durch die Farbdüsen 210 geleitet werden und Farbmittelreste von den Farbdüsen 210 entfernt werden (vgl. Fig. 5). Außerdem kann über die Reinigungsdüsen 214 Reinigungsmittel 11 von außen auf die Farbdüsen 211 gesprüht werden. Dadurch werden auch Farbrückstände, die außen an den Düsen 210 anliegen entfernt. Während der Reinigung können Ventile 212 geschlossen sein. Durch die regelmäßige Reinigung kann die Funktion der Düsenbaugruppen 211 über die Dauer des gesamten Druckvorhabens erhalten werden und eine gute Qualität des fertiggestellten Bildes 2 gewährleistet werden. Am Ende der Bahn 611 dreht sich der Roboter 100 um 180° und fährt dann entlang der Bahn 612 in entgegengesetzter Richtung zur Bahn 611 über die Bodenfläche 1 und druckt einen weiteren Teil des Bilds 2. Der Roboter 100 kann exakt entlang eines bereits bedruckten Bereiches geführt werden. Hierzu kann der Roboter 100 mit einem Kamerasystem ausgestattet sein, dass die Analyse der bereits bedruckten Bereiche der Bodenfläche 1 mittels Bildverarbeitung und die dadurch gewonnenen Informationen an die Steuerung 117 weitergibt. Die Bildverarbeitung ist im Wesentlichen dazu ausgebildet, ein mittels einer Kamera aufgenommenes, bereits gedrucktes Teilbild mit einem "Sollbild" zu vergleichen und eventuell vorhandene Abweichungen zu ermitteln.

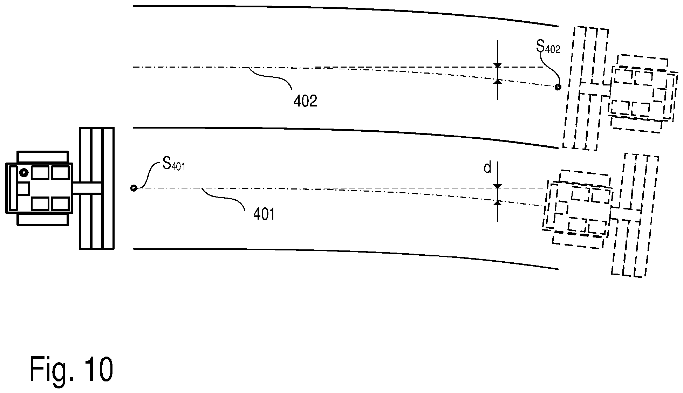

Mit Hilfe einer kamerabasierten Analyse des bereits bedruckten Bereiches (z.B. das beim Durchfahren des ersten Bahnsegments 401 erzeugte Teilbild, siehe Fig. 8) kann die Positionierung und Ausrichtung des Roboter 100 vor dem Druck eines weiteren Teil des Bildes (z.B. das beim Durchfahren des zweiten Bahnsegments 402 zu druckende Teilbild, siehe Fig. 8) verbessert werden. Um die zwei Bahnsegmente (z.B. Bahnsegmente 401, 402) möglichst gut aneinander auszurichten, kann der Roboter 100 (z.B. vor dem Drucken oder auch während des Druckens des zweiten Teilbildes) das zuvor beim Durchfahren des vorhergehenden (ersten) Bahnsegmentes gedruckte Teilbild mittels Kameraaufnahmen und Bildverarbeitung analysieren und das zweite Bahnsegment (und damit das zweite Teilbild) am ersten Teilbild ausrichten. In diesem Beispiel kann der tatsächliche Verlauf des zweiten Bahnsegmentes also von einem theoretischen Sollverlauf abweichen, da die Robotertrajektore beim Durchfahren des zweiten Bahnsegmentes laufend korrigiert werden kann, um die Robotertrajektore des zweiten Bahnsegmentes (und damit das zweite Teilbild) an das erste Teilbild anzupassen. Diese Situation ist in Fig. 10 dargestellt.

Figur 10 illustriert die oben beschriebene Anpassung der Robotertrajektorie eines Bahnsegments 402 an das Teilbild, das beim Durchfahren des vorhergehenden Bahnsegments 401 gedruckt wurde. Angenommen die beim Drucken des ersten Teilbildes tatsächlich ausgeführte Robotertrajektorie des ersten Bahnsegmentes 401 beginnt en einem Startpunkt $S_{401}$. Beim Durchfahren der Trajektorie des ersten Bahnsegmentes 401 entsteht (aus welchen Gründen auch immer) eine Abweichung von der geradlinigen Soll-Trajektorie um einen Wert d. Der Wert d muss nicht konstant sein. im vorliegenden Beispiel nimmt der Wert d mit zunehmendem Abstand vom Startpunkt $S_{401}$ zu. Mit dem oben beschriebenen Verfahren kann diese Abweichung mittels Kamera und Bildverarbeitung des gedruckten Teilbildes analysiert werden, und die Trajektorien im nachfolgenden Bahnsegment 402 kann entsprechend um den ermittelten Wert d korrigiert werden. Diese Korrektur kann einmalig vor dem Start des Drucks im zweiten Bahnsegment erfolgen (zur Ermittlung des Startpunktes $S_{402}$ der Trajektorie des zweiten Bahnsegmentes 402) sowie auch laufend beim Durchfahren des zweiten Bahnsegments 402 angepasst werden (basierend auflaufend durchgeführte Messungen mittels Kamera und Bildverarbeitung). Nicht nur die Robotertrajektorie an sich, sondern auch die Druckbefehle (also jene Positionen, an denen der Druck eines Pixels ausgelöst wird) können angepasst werden.

Der Roboter 100 kann außerdem mit Füllstandsensoren in den Farbtank 110, 111 und 112 und dem Reinigungsmitteltank 113 ausgestattet sein. Beim Unterschreiten eines vordefinierten Füllstandes in einem der Behälter kann von der Steuerung 117 des Roboters 100 zumindest ein akustischer oder optischer Alarm ausgelöst werden. Alternativ dazu kann die Steuerung 117 den Roboter 100 auch zum Startpunkt 400 oder zu einem anderen vordefinierten Punkt autonom zurückführen. Dadurch können die Farbmittel 10 sowie das Reinigungsmittel 11 rechtzeitig nachgefüllt werden und ein ungeplanter Abbruch eines Druckvorganges verhindert werden. Somit können dadurch verursachte unregelmäßige Übergänge im Druckmotiv 2 verhindert werden und eine Bahn 611, 612 und 613 jeweils nahtlos in einem Durchgang bedruckt werden.

Mit dem beschriebenen Roboter 100 und den beschriebenen Verfahren können Bilder mit Seitenlängen von 20 bis 150 m gedruckt werden. Diese Bilder können in kleinere Teilbilder mit Seitenlängen von jeweils 30 m unterteilt und dann nacheinander gedruckt werden. Aufgrund der beschriebenen Systeme zur Lokalisierung des Roboters 100 kann der Roboter 100 die einzelnen Teilbilder "nahtlos" aneinanderfügen.

**Patentansprüche**

1. Vorrichtung (100) zum Drucken eines Bildes (2) auf eine Bodenfläche (1), wobei die Vorrichtung (100) eine Steuerung (117) und ein Drucksystem (200) umfasst, das folgendes aufweist:

   mindestens einen Farbtank (110, 111, 112) mit Farbmittel (10);
   mindestens einen Sprühbalken (201, 202, 203) mit mehreren nebeneinander angeordneten Düsenbaugruppen (211), die jeweils ein von der Steuerung (117) steuerbares Ventil (212) und eine Farbdüse (210) aufweisen, über die Farbmittel (10) auf die Bodenfläche (1) aufgetragen werden kann, und
   einen Reinigungsmitteltank (113), der über eine oder mehrere Zuleitungen (217) mit zumindest einem Teil der Düsenbaugruppen (211) verbunden ist,
   wobei jede der Düsenbaugruppen (211) eine über die Zuleitung (217) versorgte und der jeweiligen Farbdüse (210, 220, 230) zugeordnete Reinigungsdüse (214) aufweist, die so angeordnet ist, dass Reinigungsmittel von außen auf die Farbdüse (210, 220, 230) gesprüht werden kann, und
   wobei die Farbdüse (210, 220, 230) über ein Ventil (215) mit der Zuleitung (217) verbunden ist, sodass Reinigungsmittel ins Innere der Farbdüse (210, 220, 230) geleitet und aus der Farbdüse herausgesprüht werden kann.

2. Vorrichtung gemäß Anspruch 1, wobei die Steuerung (117) dazu ausgebildet ist, die Ventile (212) der einzelnen Düsenbaugruppen (211) abhängig von der Position der Vorrichtung auf der Bodenfläche (1) einzeln so anzusteuern, sodass das Bild (2) pixelweise auf die Bodenfläche (1) aufgetragen wird.

3. Vorrichtung gemäß einem der Ansprüche 1 oder 2, wobei der Abstand zweier benachbarter Düsenbaugruppen (211) einen Abstand aufweist, der dem Abstand zweier benachbarter Bildzeilen des Bildes (2) entspricht.

4. Vorrichtung gemäß einem der Ansprüche 1 bis 3, wobei die Steuerung (117) dazu ausgebildet ist, die Vorrichtung entlang einer Trajektorie über die Bodenfläche (1) zu navigieren und dabei fortlaufend die Ventile (212) anzusteuern, um über die Farbdüsen (210) einzelne Bildpunkte mehrerer Bildzeilen des Bildes (2) auf der Bodenfläche (1) zu erzeugen.

5. Vorrichtung gemäß Anspruch 4,
wobei die Trajektorie der Vorrichtung in zwei oder mehr benachbarten Bahnsegmenten annähernd geradlinig verläuft und die Steuerung (117) dazu ausgebildet ist, beim Durchfahren der Trajektorie in den benachbarten Bahnsegmenten jeweils benachbarte Teilbilder des Bildes (2) zu Drucken.

6. Vorrichtung gemäß Anspruch 3 oder 5,

wobei mit der Steuerung (117) mindestens eine Kamera gekoppelt ist, mit der ein beim Durchfahren eines ersten Bahnsegmentes gedrucktes Teilbild des Bildes (2) erfasst werden kann, und
wobei die Steuerung (117) dazu ausgebildet ist, basierend auf dem aufgenommenen Teilbild die Trajektorie der Vorrichtung in einem zweiten Bahnsegment anzupassen.

7. Vorrichtung gemäß Anspruch 6,
wobei die Steuerung (117) dazu ausgebildet ist, basierend auf dem aufgenommenen Teilbild einen Startpunkt ($S_{402}$) der Trajektorie der Vorrichtung in den zweiten Bahnsegment zu bestimmen.

8. Vorrichtung gemäß einem der Ansprüche 1 bis 7, der weiter

einen oder mehrere Sensoren umfasst, welche Sensordaten betreffend die Position oder die Bewegung der Vorrichtung erfassen,
wobei die Steuerung (117) dazu ausgebildet ist, aus den erfassten Sensordaten eine Position und einer Orientierung der Vorrichtung zu bestimmen.

9. Vorrichtung gemäß Anspruch 8,
wobei die Steuerung (117) dazu ausgebildet ist, zur Bestimmung der Position und der Orientierung der Vorrichtung die von zwei oder mehreren Sensoren erfassten Sensordaten zu fusionieren.

10. Vorrichtung gemäß Anspruch 8 oder 9,

wobei einer der Sensoren ein Sensor zur Detektion von Landmarken in der Umgebung ist,
wobei der Sensor die Relativposition der Vorrichtung relativ zu einer Landmarke ermittelt, und
wobei die Steuerung (117) dazu ausgebildet ist, die Position der Vorrichtung basierend auf den ermittelten Relativpositionen und den bekannten Positionen der Landmarken zu ermitteln.

11. Vorrichtung gemäß Anspruch 8,
wobei die Steuerung (117) dazu ausgebildet ist abhängig von der Position der Vorrichtung Druckbefehle für das Drucksystem (200) zu generieren, wobei mittels der Druckbefehle die Ventile (212) der einzelnen Düsenbaugruppen (211) angesteuert werden.

12. Vorrichtung gemäß einem der Ansprüche 1 bis 11,
wobei pro Farbe ein Sprühbalken (201, 202, 203) vorgesehen ist, die Sprühbalken (201, 202, 203) im Wesentlichen parallel zueinander angeordnet sind und die Düsenbaugruppen (211) der Sprühbalken (201, 202, 203) im Wesentlichen entlang einer Linie angeordnet sind.

13. Verfahren zum Drucken eines Bildes (2) auf eine Bodenfläche mittels einer Vorrichtung (100) mit einem Drucksystem, das mindestens einen Sprühbalken (201, 202, 203) mit mehreren nebeneinander angeordneten Düsenbaugruppen (211), die jeweils ein steuerbares Ventil (212) und eine Farbdüse (210) aufweisen, und einen Reinigungsmitteltank (113) aufweist, der über eine oder mehrere Zuleitungen (217) mit zumindest einem Teil der Düsenbaugruppen (211) verbunden ist, wobei jede der Düsenbaugruppen (211) eine über die Zuleitung (217) versorgte und der jeweiligen Farbdüse (210, 220, 230) zugeordnete Reinigungsdüse (214) aufweist, wobei die Farbdüse (210, 220, 230) über ein Ventil (215) mit der Zuleitung (217) verbunden ist; das Verfahren weist auf:

Durchfahren eines ersten Bahnsegments (401) mit der Vorrichtung (100);
Ansteuern der Ventile (212) der Düsenbaugruppen (211) zum Abgeben von Farbe durch eine dem Ventil (212) zugeordnete Farbdüse (210), wobei für jeden Bildpunkt und jede Farbe abhängig von der Position der Vorrichtung (100) ein Druckbefehl für die Ventile (212) erzeugt wird, sodass das Bild (2) pixelweise auf die Bodenfläche (1) aufgetragen wird,
regelmäßiges Reinigen der Farbdüsen (210) durch Aufsprühen von Reinigungsmittel auf die Farbdüsen von außen mittels den in den Düsenbaugruppen (211) angeordneten Reinigungsdüsen (214), und
regelmäßiges Reinigen der Farbdüsen (210) durch Leiten ins Innere der Farbdüse (210, 220, 230) und Heraussprühen von Reinigungsmittel aus der Farbdüse (210, 220, 230).

14. Das Verfahren gemäß Anspruch 13, wobei das Reinigen durchgeführt wird, nachdem die Vorrichtung die Trajektorie im ersten Bahnsegment (401) durchfahren hat und bevor die ein weiteres Bahnsegment (402) durchfährt.

15. Das Verfahren gemäß Anspruch 13 oder 14, das weiter aufweist:

Erfassen eines beim Durchfahren des ersten Bahnsegmentes (401) gedrucktes Teilbild des Bildes (2) mittels einer Kamera;
Anpassen einer Trajektorie die Vorrichtung (100) in einem zweiten Bahnsegment (402), das dem ersten Bahnsegment (402) folgt, basierend auf dem aufgenommenen Teilbild.

**Claims**

1. A device (100) for printing an image (2) onto a floor surface (1), wherein the device (100) comprises a controller (117) and a printing system (200), which includes the following:

at least one colorant tank (110, 111, 112) having colorant (10);
at least one spray bar (201, 202, 203) having multiple nozzle assemblies (211) arranged adjacent to one another, which each have a valve (212) controllable by the controller (117) and a colorant nozzle (210), via which the colorant (10) can be applied to the floor surface (1), and
a cleaning agent tank (113), which is connected via one or more supply lines (217) to at least a part of the nozzle assemblies (211),
wherein each of the nozzle assemblies (211) has a cleaning nozzle (214), which is supplied via the supply line (217) and associated with the respective colorant nozzle (210, 220, 230) and which is arranged so that cleaning agent can be sprayed from the outside onto the colorant nozzle (210, 220, 230), and
wherein the colorant nozzle (210, 220, 230) is connected via a valve (215) to the supply line (217), so that cleaning agent can be conducted into the interior of the colorant nozzle (210, 220, 230) and sprayed out of the colorant nozzle.

2. The device as claimed in claim 1,
wherein the controller (117) is designed to individually activate the valves (212) of the individual nozzle assemblies (211) in dependence on the position of the device on the floor surface (1) in such a way that the image (2) is applied pixel by pixel to the floor surface (1).

3. The device as claimed in one of claims 1 or 2,
wherein the distance of two adjacent nozzle assemblies (211) has a distance which corresponds to the distance of two adjacent image lines of the image (2).

4. The device as claimed in any one of claims 1 to 3, wherein the controller (117) is designed to navigate the device along a trajectory over the floor surface (1) and at the same time to continuously activate the valves (212) in order to produce individual pixels of multiple image lines (2) on the floor surface (1) via the colorant nozzles (210).

5. The device as claimed in claim 4,
wherein the trajectory of the device extends approximately linearly in two or more adjacent path segments and the controller (117) is designed to print adjacent partial images of the image (2) in each case during the travel through the trajectory in the adjacent path segments.

6. The device as claimed in claim 3 or 5,
wherein at least one camera is coupled to the controller (117), using which a partial image of the image (2) printed during the travel through a first path segment can be acquired, and wherein the controller (117) is designed to adapt the trajectory of the device in a second path segment based on the recorded partial image.

7. The device as claimed in claim 6,
wherein the controller (117) is designed to determine a starting point ($S_{402}$) of the trajectory of the device in the second path segment based on the recorded partial image.

8. The device as claimed in any one of claims 1 to 7, which furthermore
comprises one or more sensors, which acquire sensor data relating to the position or the movement of the device, wherein the controller (117) is designed to determine a position and orientation of the device from the acquired sensor data.

9. The device as claimed in claim 8,
wherein the controller (117) is designed to fuse the sensor data acquired by two or more sensors to determine the position and the orientation of the device.

10. The device as claimed in claim 8 or 9,
wherein one of the sensors is a sensor for detecting landmarks in the surroundings, wherein the sensor ascertains the relative position of the device in relation to a landmark, and
wherein the controller (117) is designed to ascertain the position of the device based on the ascertained relative positions and the known positions of the landmarks.

11. The device as claimed in claim 8,
wherein the controller (117) is designed to generate printing commands for the printing system (200) in dependence on the position of the device, wherein the valves (212) of the individual nozzle assemblies (211) are activated by means of the printing commands.

12. The device as claimed in any one of claims 1 to 11, wherein one spray bar (201, 202, 203) is provided per colour, the spray bars (201, 202, 203) are arranged essentially in parallel to one another and the nozzle assemblies (211) of the spray bars (201, 202, 203) are arranged essentially along a line.

13. A method for printing an image (2) onto a floor surface by means of a device (100) using a printing system, which includes at least one spray bar (201, 202, 203) having multiple nozzle assemblies (211) arranged adjacent to one another, which each include a controllable valve (212) and a colorant nozzle (210), and a cleaning agent tank (113), which is connected via one or more supply lines (217) to at least a part of the nozzle assemblies (211), wherein each of the nozzle assemblies (211) includes a cleaning nozzle (214), which is supplied via the supply line (217) and is associated with the respective colorant nozzle (210, 220, 230), wherein the colorant nozzle (210, 220, 230) is connected via a valve (215) to the supply line (217); the method includes:

traveling through a first path segment (401) using the device (100);
activating the valves (212) of the nozzle assemblies (211) to dispense colorant through a colorant nozzle (210) associated with the valve (212),
wherein a printing command for the valves (212) is generated for each pixel and each colour in dependence on the position of the device (100), so that the image (2) is applied pixel by pixel to the floor surface (1),
regularly cleaning the colorant nozzles (210) by spraying cleaning agent on the colorant nozzles from the outside by means of the cleaning nozzles (214) arranged in the nozzle assemblies (211), and
regularly cleaning the colorant nozzles (210) by conducting cleaning agent into the interior of the colorant nozzle (210, 220, 230) and spraying it out of the colorant nozzle (210, 220, 230) .

14. The method as claimed in claim 13, wherein the cleaning is carried out after the device has travelled through the trajectory in the first path segment (401) and before it travels through a further path segment (402).

15. The method as claimed in claim 13 or 14, which furthermore includes:

acquiring a partial image of the image (2) printed during the travels of the first path segment (401) by means of a camera;
adapting a trajectory of the device (100) in a second path segment (402), which follows the first path segment (402), based on the recorded partial image.

**Revendications**

1. Procédé comprenant :

la réception, par un dispositif sans fil (110), d'un ou de plusieurs messages de commande de ressources radio comprenant des paramètres de configuration de rapports d'informations d'état de canal, CSI, semi-persistants à transmettre par l'intermédiaire d'un canal partagé de liaison montante physique, PUSCH, d'une première cellule dans un groupe d'avance temporelle ;
la réception d'informations de commande de liaison descendante, DCI, indiquant l'activation d'une pluralité de ressources PUSCH du PUSCH de la première cellule pour les rapports CSI semi-persistants ; et
en réponse à l'expiration d'un temporisateur d'alignement temporel du groupe d'avance temporelle, l'effacement de premières ressources PUSCH parmi la pluralité de ressources PUSCH, dans lequel les premières ressources PUSCH se produisent après l'expiration du temporisateur d'alignement temporel.

2. Procédé selon la revendication 1, comprenant en outre la transmission d'un premier rapport CSI semi-persistant, parmi les rapports CSI semi-persistants, par l'intermédiaire de secondes ressources PUSCH parmi la pluralité de ressources PUSCH, dans lequel les secondes ressources PUSCH se produisent avant l'expiration du temporisateur d'alignement temporel.

3. Procédé selon l'une quelconque des revendications 1 et 2, dans lequel les un ou plusieurs messages de commande de ressources radio comprennent en outre :

des premiers paramètres de configuration d'une ou de plusieurs cellules regroupées dans le groupe d'avance temporelle ; et
des seconds paramètres de configuration du temporisateur d'alignement temporel pour le groupe d'avance temporelle.

4. Procédé selon l'une quelconque des revendications 1 à 3, dans lequel la pluralité de ressources PUSCH de la première cellule sont déterminées sur la base :

des DCI ; et

des paramètres de configuration des rapports CSI semi-persistants.

5. Procédé selon l'une quelconque des revendications 1 à 4, dans lequel les un ou plusieurs messages de commande de ressources radio sont un ou plusieurs messages de commande de ressources radio comprenant les paramètres de configuration des rapports CSI semi-persistants.

6. Procédé selon l'une quelconque des revendications 1 à 5, comprenant en outre :

la réception de secondes DCI indiquant l'activation d'une seconde pluralité de ressources PUSCH, dans lequel la seconde pluralité de ressources PUSCH sont déterminées sur la base :

des secondes DCI ; et
des paramètres de configuration des rapports CSI semi-persistants ; et

la transmission d'un second rapport CSI semi-persistant, parmi les rapports CSI semi-persistants, par l'intermédiaire de ressources de la seconde pluralité de ressources PUSCH.

7. Dispositif sans fil (110) comprenant un ou plusieurs processeurs et une mémoire stockant des instructions qui, lorsqu'elles sont exécutées par les un ou plusieurs processeurs, amènent le dispositif sans fil à exécuter le procédé selon l'une quelconque des revendications 1 à 6.

8. Support lisible par ordinateur non transitoire comprenant des instructions qui, lorsqu'elles sont exécutées par un ou plusieurs processeurs, amènent le ou les processeurs à exécuter le procédé selon l'une quelconque des revendications 1 à 6.

9. Procédé comprenant :

la transmission, par une station de base (120), d'un ou de plusieurs messages de commande de ressources radio comprenant des paramètres de configuration de rapports d'informations d'état de canal, CSI, semi-persistants à transmettre par l'intermédiaire d'un canal partagé de liaison montante physique, PUSCH, d'une première cellule dans un groupe d'avance temporelle ;
la transmission d'informations de commande de liaison descendante, DCI, indiquant l'activation d'une pluralité de ressources PUSCH de la première cellule pour les rapports CSI semi-persistants ; et
en réponse à l'expiration d'un temporisateur d'alignement temporel du groupe d'avance temporelle, l'effacement de premières ressources PUSCH parmi la pluralité de ressources PUSCH, dans lequel les premières ressources PUSCH se produisent après l'expiration du temporisateur d'alignement temporel.

10. Procédé selon la revendication 9, comprenant en outre la réception d'un premier rapport CSI semi-persistant, parmi les rapports CSI semi-persistants, par l'intermédiaire de secondes ressources PUSCH parmi la pluralité de ressources PUSCH, dans lequel les secondes ressources PUSCH se produisent avant l'expiration du temporisateur d'alignement temporel.

11. Procédé selon l'une quelconque des revendications 9 et 10, dans lequel les un ou plusieurs messages de commande de ressources radio comprennent en outre :

des premiers paramètres de configuration d'une ou de plusieurs cellules regroupées dans le groupe d'avance temporelle ; et
des seconds paramètres de configuration du temporisateur d'alignement temporel pour le groupe d'avance temporelle.

12. Procédé selon l'une quelconque des revendications 9 à 11, dans lequel la pluralité de ressources PUSCH de la première cellule sont déterminées sur la base :

des DCI ; et
des paramètres de configuration des rapports CSI semi-persistants.

13. Procédé selon l'une quelconque des revendications 9 à 12, dans lequel les un ou plusieurs messages de commande de ressources radio sont un ou plusieurs messages de commande de ressources radio comprenant les paramètres de configuration des rapports CSI semi-persistants.

14. Station de base (120) comprenant un ou plusieurs processeurs et une mémoire stockant des instructions qui, lorsqu'elles sont exécutées par les un ou plusieurs processeurs, amènent la station de base à exécuter le procédé selon l'une quelconque des revendications 9 à 13.

15. Support lisible par ordinateur non transitoire comprenant des instructions qui, lorsqu'elles sont exécutées par un ou plusieurs processeurs, amènent les un ou plusieurs processeurs à exécuter le procédé selon l'une quelconque des revendications 9 à 13.

100

113  102  111

118

117

101

116

120

112  103  110

# Fig. 1

100

230  a

203a
202a
201a

203
202
201

210  220

a

# Fig. 2

Fig. 3

Fig. 4

Fig. 5

Fig. 6

Fig. 7

Fig. 8

Fig. 9

Fig. 10

**EP 3 551 345 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2433716 A1
- EP 2641661 A1
- GB 2266863 A
- DE 10390349 B4
- US 6330503 B1
- WO 2015007930 A1
- EP 2985385 A1